(19) Europäisches Patentamt
European Patent Office
Office européen des brevets

(11) **EP 3 335 956 A2**

(12) **EUROPEAN PATENT APPLICATION**

(43) Date of publication:
**20.06.2018 Bulletin 2018/25**

(51) Int Cl.:
***B60W 30/18*** *(2012.01)*

(21) Application number: **17200138.0**

(22) Date of filing: **06.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.12.2016 JP 2016235653**

(71) Applicant: **TOYOTA JIDOSHA KABUSHIKI KAISHA**
**Toyota-shi, Aichi-ken 471-8571 (JP)**

(72) Inventors:
• **OHKI, Takao**
**Toyota-shi, Aichi-ken 471-8571 (JP)**
• **ICHIKAWA, Akihiko**
**Toyota-shi, Aichi-ken 471-8571 (JP)**
• **MURAOKA, Junichi**
**Toyota-shi, Aichi-ken 471-8571 (JP)**
• **INATA, Kazunari**
**Toyota-shi, Aichi-ken 471-8571 (JP)**

(74) Representative: **Cabinet Beau de Loménie**
**158, rue de l'Université**
**75340 Paris Cedex 07 (FR)**

(54) **CONTROLLER FOR VEHICLE**

(57) When an added weight which is a loading weight of a vehicle and a weight of a towed vehicle is equal to or greater than a free running prevention weight threshold value, free running is prevented even if a free running start condition is satisfied. The free running prevention weight threshold value is changed using a vehicle speed, a vehicle acceleration, and a downhill gradient of a road surface on which the vehicle travels as a parameter. When the vehicle speed is low, when the vehicle acceleration is low, and when the downhill gradient of the road surface is small, sufficient deceleration performance can be secured in spite of a large added weight and thus the free running prevention weight threshold value is set to be greater. Accordingly, it is possible to enlarge a free running executable range and to achieve an improvement in fuel consumption rate of an engine.

FIG. 3

**EP 3 335 956 A2**

**Description**

BACKGROUND OF THE INVENTION

1. Field of the Invention

The invention relates to a controller for a vehicle. Particularly, the invention relates to a controller which is applied to a vehicle that can execute coast traveling in which a connection/disconnection device (which includes a clutch device or the like) disposed in a power transmission path between a driving force source and driving wheels is disengaged.

2. Description of Related Art

In the related art, as disclosed in Japanese Patent Application Publication No. 2016-133015 (JP 2016-133015 A), an automatic clutch of which a disengaging operation and an engaging operation are automatically performed by a clutch actuator is known as a clutch device that is disposed in a power transmission path between an engine which is an example of a driving force source and a gear shift device.

JP 2016-133015 A discloses a vehicle in which an automatic clutch is mounted and which executes coast traveling by disengaging the automatic clutch when a coast traveling start condition (for example, a condition that no pedal is depressed) is satisfied during traveling. This traveling state is generally referred to as free running or coast traveling. According to this free running, since a braking force due to drag of an engine (a so-called engine brake) is not generated, it is possible to extend a coast traveling distance and to achieve an improvement in fuel consumption rate of the engine.

SUMMARY OF THE INVENTION

Japanese Patent Application Publication No. 2006-348840 (JP 2006-348840 A) discloses that a vehicle deceleration to be achieved (hereinafter referred to as a target deceleration) is changed depending on a loading weight of a vehicle or presence or absence of a towed vehicle. That is, in the technique disclosed in JP 2006-348840 A, when a loading weight of a vehicle is large or when the vehicle tows a towed vehicle, a braking force due to an engine brake is used to acquire the target deceleration and thus excellent deceleration performance can be secured. For example, control of generating a braking force from an engine brake to acquire a target deceleration depending on the traveling state during coast traveling of the vehicle can be performed.

In a case in which the above-mentioned control of enabling coast traveling is applied to the vehicle disclosed in JP 2006-348840 A, when the vehicle has a large loading weight or the vehicle tows a towed vehicle, a clutch device in the vehicle is engaged to acquire a target deceleration using an engine brake and thus coast traveling is prevented in most driving areas. For example, even if a coast traveling start condition is satisfied due to depression of no pedal during coast traveling of the vehicle, the clutch device is engaged regardless of a vehicle speed or the like and coast traveling is not executed when the vehicle has a large loading weight or the vehicle tows a towed vehicle. Accordingly, the effect of coast traveling that an improvement in fuel consumption rate of an engine is achieved cannot be obtained.

When the coast traveling start condition is satisfied, executing coast traveling regardless of the loading weight of the vehicle or presence or absence of a towed vehicle can also be considered, but a vehicle speed may increase and cause an inertial force of the vehicle to excessively increase during coast traveling when the vehicle has a large loading weight or the vehicle tows a towed vehicle. In this case, it is difficult to secure excellent deceleration performance.

The invention is made in consideration of the above-mentioned circumstances and provides a controller for a vehicle that can achieve an improvement in energy consumption rate of a driving force source by enabling coast traveling in a situation in which excellent deceleration performance of the vehicle can be satisfactorily secured when the vehicle has a large loading weight or the vehicle tows a towed vehicle.

Therefore, according to an aspect of the invention, there is provided a controller that is applied to a vehicle that is capable of executing coast traveling in which a connection/disconnection device disposed in a power transmission path between a driving force source and driving wheels is disengaged when a predetermined coast traveling start condition is satisfied. The controller includes a coast traveling preventing unit. The coast traveling preventing unit is configured to: (i) prevent the coast traveling even if the coast traveling start condition is satisfied when an added weight which is a weight of at least one of a loading weight of the vehicle and a weight of a towed vehicle when the vehicle tows the towed vehicle is equal to or greater than a coast traveling prevention weight threshold value; (ii) change the coast traveling prevention weight threshold value using at least one of a vehicle speed, a vehicle acceleration, and a downhill gradient of a road surface on which the vehicle travels as a parameter; and (iii) set the coast traveling prevention weight threshold value to be greater when the value of the parameter is relatively small than when the value of the parameter is relatively large.

According to the controller for a vehicle, when the value of the parameter (at least one of the vehicle speed, the vehicle acceleration, and the downhill gradient of the road surface on which the vehicle travels) is small, the coast traveling prevention weight threshold value which is a threshold value for preventing the coast traveling is set to be larger than when the value of the parameter is large. For example, when the vehicle speed is low, the coast traveling prevention weight threshold value is set to be larger than when the vehicle speed is high, and a lower limit value of the added weight (at least one weight of the loading weight of the vehicle and the weight of a towed vehicle when the vehicle tows the towed vehicle) serves as a reference for preventing the coast traveling. Accordingly, an added weight range in which the coast traveling is permitted is enlarged. That is, when the vehicle speed is low, sufficient deceleration performance can be secured even if the loading weight of the vehicle or the weight of the towed vehicle is large and thus the coast traveling prevention weight threshold value is set to be large (the added weight range in which the coast traveling is permitted is enlarged). The same is true of the other parameters (the vehicle acceleration and the downhill gradient of the road surface on which the vehicle travels). Accordingly, even when the loading weight of the vehicle is large or the vehicle tows a towed vehicle, it is possible to achieve an improvement in energy consumption rate of a driving force source by permitting the coast traveling in a situation in which deceleration performance of the vehicle can be secured well.

In the controller for a vehicle, the coast traveling preventing unit may be configured to prevent the coast traveling regardless of the added weight when the value of the parameter is equal to or greater than an upper limit value.

According to the controller for a vehicle, when the added weight is small and the value of the parameter (at least one of the vehicle speed, the vehicle acceleration, and the downhill gradient of the road surface on which the vehicle travels) is equal to or greater than the upper limit value even if the added weight is small, the coast traveling is prevented in consideration of a likelihood that an inertial force of the vehicle will increase excessively and excellent deceleration performance will not be secured when the coast traveling is executed. Accordingly, it is possible to maintain a state in which deceleration performance of the vehicle can be satisfactorily secured.

In the controller for a vehicle, the coast traveling preventing unit may be configured to: (i) change the coast traveling prevention weight threshold value using the vehicle speed and the downhill gradient of the road surface on which the vehicle travels as parameters; and (ii) when the vehicle speed is lower than the upper limit value set for the vehicle speed and a difference value between the vehicle speed and the upper limit value is less than a predetermined value, set the upper limit value set for the downhill gradient of the road surface on which the vehicle travels to be less than the upper limit value set when the difference value is equal to or greater than the predetermined value.

When the vehicle executes coast traveling at a vehicle speed (hereinafter also referred to as an actual vehicle speed) which is lower than an upper limit value (hereinafter also referred to as a vehicle speed upper limit value) set for the vehicle speed, the difference value between the actual vehicle speed and the vehicle speed upper limit value is less than a predetermined value, and a road surface on which the vehicle travels has a downhill gradient, the actual vehicle speed reaches the vehicle speed upper limit value for a short time and the coast traveling is prevented. For example, when such a situation occurs immediately after the coast traveling is started, there is concern that the coast traveling will be prevented immediately after the coast traveling is started and behavior of the vehicle will be changed for a short time. On the contrary, in the above-mentioned controller for a vehicle, when the actual vehicle speed is lower than the vehicle speed upper limit value and the difference value between the vehicle speed and the upper limit value is less than a predetermined value, an upper limit value set for the downhill gradient of the road surface (hereinafter also referred to as a downhill gradient upper limit value) is set to be smaller than when the difference value is equal to or greater than the predetermined value and the coast traveling is prevented on the condition of the downhill gradient of the road surface (even when the downhill gradient of the road surface is small). Accordingly, it is possible to suppress a variation in behavior of the vehicle for a short time.

In the controller for a vehicle, the coast traveling preventing unit may be configured to: (i) change the coast traveling prevention weight threshold value using the vehicle acceleration and the downhill gradient of the road surface on which the vehicle travels as parameters; and (ii) when the vehicle acceleration is lower than the upper limit value set for the vehicle acceleration and a difference value between the vehicle acceleration and the upper limit value is less than a predetermined value, set the upper limit value set for the downhill gradient of the road surface on which the vehicle travels to be less than the upper limit value set when the difference value is equal to or greater than the predetermined value.

According to the controller for a vehicle, when the vehicle acceleration (hereinafter also referred to as an actual vehicle acceleration) is lower than an upper limit value (hereinafter also referred to as a vehicle acceleration upper limit value) set for the vehicle acceleration and the difference value between the actual vehicle acceleration and the vehicle acceleration upper limit value is less than a predetermined value, the downhill gradient upper limit value is set to be smaller than when the difference value is equal to or greater than the predetermined value and the coast traveling is prevented on the condition of the downhill gradient of the road surface (even when the downhill gradient of the road surface is small). Accordingly, it is possible to suppress a variation in behavior of the vehicle for a short time.

As described above, in the controller for a vehicle according to the invention, when at least one of the vehicle speed, the vehicle acceleration, and the downhill gradient of the road surface on which the vehicle travels is used as a parameter and the value of the parameter is small, the coast traveling prevention weight threshold value which is a threshold value for preventing the coast traveling is set to be larger than when the value of the parameter is large. Accordingly, even when the loading weight of the vehicle is large or the vehicle tows a towed vehicle, it is possible to achieve an improvement in energy consumption rate of a driving force source by permitting the coast traveling in a situation in which deceleration performance of the vehicle can be secured well.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a diagram schematically illustrating a configuration of a power train and a control system of a vehicle according to an embodiment of the invention;
FIG. 2 is a block diagram illustrating a configuration of a control system associated with various ECUs according to the embodiment;
FIG. 3 is a flowchart illustrating a free running control routine according to the embodiment;
FIG. 4 is a diagram illustrating an example of a vehicle speed-added weight map according to the embodiment;
FIG. 5 is a diagram illustrating an example of a vehicle acceleration-added weight map according to the embodiment;
FIG. 6 is a diagram illustrating an example of a road downhill gradient-added weight map according to the embodiment;
FIG. 7 is a timing chart illustrating an example of changes of a free running start condition, a vehicle speed, a free running prevention weight threshold value, and a free running execution flag when free running is ended with an increase in vehicle speed in the embodiment;
FIG. 8 is a timing chart illustrating an example of changes of a free running start condition, a vehicle speed, a free running prevention weight threshold value, and a free running execution flag when free running is prevented under a condition that the vehicle speed is equal to or greater than a predetermined value when the free running start condition is satisfied in the embodiment;
FIG. 9 is a diagram illustrating an example of a vehicle speed-added weight map according to a modified example of the embodiment; and
FIG. 10 is a diagram illustrating an example of a road downhill gradient-added weight map according to the modified example.

DETAILED DESCRIPTION OF EMBODIMENTS

Hereinafter, an embodiment of the invention will be described with reference to the accompanying drawings. In this embodiment, it is assumed that the invention is applied to a front-engine/front-drive (abbreviated to FF) type vehicle.

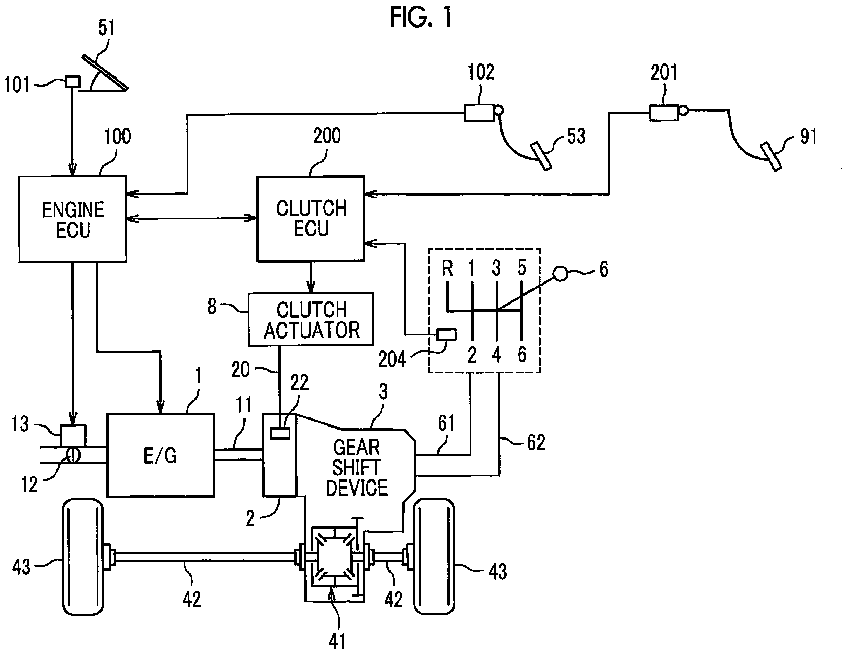

FIG. 1 is a diagram schematically illustrating a configuration of a power train and a control system of a vehicle according to an embodiment of the invention. As illustrated in FIG. 1, an automatic clutch 2 corresponding to a connection/disconnection device described in the claims is disposed in a power transmission path between a crank shaft 11 which is an output shaft of an engine 1 as an example of a driving force source and a manual gear shift device 3 as an example of a gear shift device. An output side of the gear shift device 3 is connected to driving wheels 43 and 43 via a differential gear set 41 and drive shafts 42 and 42.

The engine 1 is, for example, an internal combustion engine such as a gasoline engine. The engine 1 is controlled by an engine ECU 100.

The automatic clutch 2 includes a known concentric slave cylinder 22 (hereinafter referred to as a CSC 22) and an engagement state thereof is adjusted through an operation based on a hydraulic pressure supplied from a clutch hydraulic channel 20.

Specifically, a clutch actuator 8 operates in response to a clutch control signal from a clutch ECU 200 to control a hydraulic pressure supplied from the clutch hydraulic channel 20 to a hydraulic pressure chamber of the CSC 22. The clutch actuator 8 includes an electric motor, a reduction gear mechanism, and a clutch master cylinder which are not illustrated and is configured to adjust a hydraulic pressure generated in the clutch master cylinder by activating the electric motor.

When a clutch disengagement command signal serving as the clutch control signal is output from the clutch ECU 200 in a state in which the automatic clutch 2 is engaged, the CSC 22 operates (a release bearing disposed in the CSC 22 moves forward) to disengage the automatic clutch 2 by supply of a hydraulic pressure from the clutch hydraulic channel 20 due to operation of the clutch actuator 8.

On the other hand, when a clutch engagement command signal serving as the clutch control signal is output from the clutch ECU 200, the supply of a hydraulic pressure from the clutch hydraulic channel 20 due to operation of the clutch actuator 8 is released and the CSC 22 operates (the release bearing moves rearward) to engage the automatic clutch 2. A configuration for switching the engaged state and the disengaged state in the automatic clutch 2 is well known and thus will not be described herein.

In this way, the clutch system according to this embodiment is configured as a so-called clutch-by-wire system in which the automatic clutch 2 is switched between an engaged state and a disengaged state with operation of the clutch actuator 8 in response to the clutch control signal from the clutch ECU 200. That is, the automatic clutch 2 is configured as a "connection/disconnection device that is disposed in a power transmission path between a driving force source and the driving wheels" in the claims.

Outputting of the clutch control signal from the clutch ECU 200 may be performed with a driver's depression of a clutch pedal 91 or may be performed without a driver's depression of the clutch pedal 91. That is, a driver's depression amount of the clutch pedal 91 (a depression amount from a state (with a depression amount of "0") in which the clutch pedal 91 is not depressed) is detected by a clutch pedal stroke sensor 201 which will be described later. The clutch control signal may be output from the clutch ECU 200 in response to an output signal from the clutch pedal stroke sensor 201, or the clutch control signal may be output from the clutch ECU 200 without a driver's depression of the clutch pedal 91 as in a free running state to be described (a state in which the vehicle travels in a state in which transmission of power between the engine 1 and the gear shift device 3 is cut off).

The gear shift device 3 is configured as a manual transmission which is a known manual gear shift device and is a normally meshing type parallel gear mechanism with a synchromesh mechanism, for example, in which six forward shift stages and a reverse shift stage can be set up. In the gear shift device 3, when a driver operates a shift lever 6 (performs a shift operation), an operating force thereof operates a predetermined synchromesh mechanism (not illustrated) via a selection cable 61 and a shift cable 62. Accordingly, a desired shift stage (one shift stage of the six forward shift stages and the reverse shift stage) is set up.

The gear shift device 3 may be configured to transmit an operating force of the shift lever 6 to a synchromesh mechanism via a fork shaft and a shift fork. The gear shift device 3 may be a so-called automated manual transmission (AMT). In this case, the control system includes an ECT-ECU and actuators (a selection actuator and a shift actuator) operate to set up a desired shift stage in response to a gear shift control signal output from the ECT-ECU by a driver's operation of the shift lever.

By a gear shift operation of the gear shift device 3, a rotational force of the engine 1 input to the gear shift device 3 via the automatic clutch 2 is shifted at a predetermined gear shift ratio in the gear shift device 3 and is then transmitted to the right and left driving wheels 43 and 44 via the differential gear set 41 and the drive shafts 42 and 42, whereby the vehicle travels.

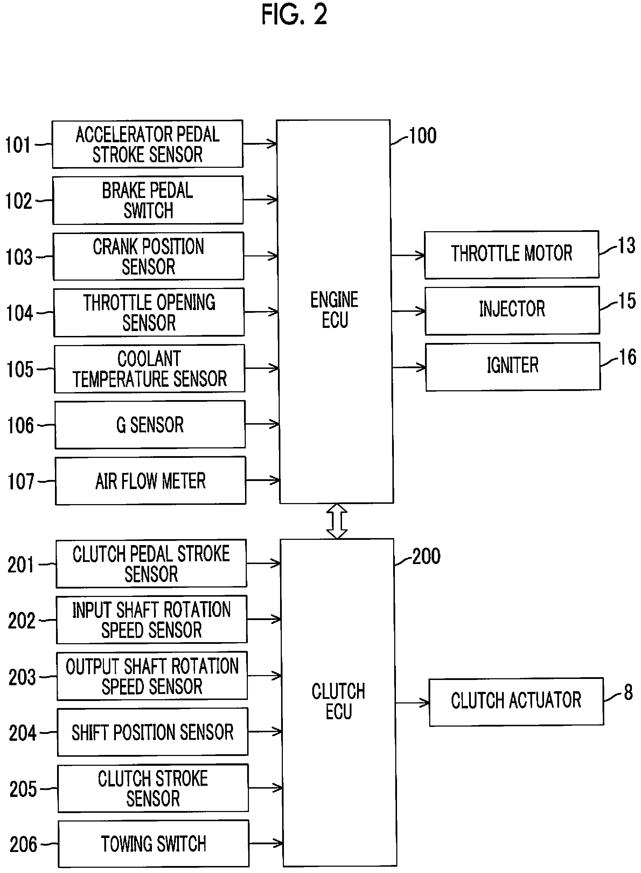

A configuration of a control system associated with the ECUs 100 and 200 will be described below with reference to FIG. 2.

Each of the ECUs 100 to 200 includes a microcomputer including a CPU, a ROM, a RAM, and a backup RAM and an input/output interface.

The input interface of the engine ECU 100 is connected to an accelerator pedal stroke sensor 101 that outputs a signal based on an amount of depression of an accelerator pedal 51 (see FIG. 1), a brake pedal switch 102 that outputs a brake-ON signal when a brake pedal 53 is depressed, a crank position sensor 103 that outputs a signal based on a rotational angle position of the crank shaft 11, a throttle opening level sensor 104 that outputs a signal based on an opening level of a throttle valve 12 disposed in an intake system of the engine 1, a coolant temperature sensor 105 that outputs a signal based on a temperature of a coolant of the engine 1, a G sensor 106 that outputs a signal based on a longitudinal vehicle acceleration (longitudinal G), and an air flow meter 107 that outputs a signal based on an amount of intake air.

The output interface of the engine ECU 100 is connected to a throttle motor 13, an injector 15, and an igniter 16 of an ignition plug.

The engine ECU 100 comprehensively controls operation of the engine 1 by detecting an operating state of the engine 1 based on a variety of information input from the sensors and performing control of the throttle motor 13 (intake air control), control of the injector 15 (fuel injection control), control of the igniter 16 (ignition timing control), and the like.

The input interface of the clutch ECU 200 is connected to a clutch pedal stroke sensor 201 that outputs a signal based on an amount of depression of the clutch pedal 91, an input shaft rotation speed sensor 202 that outputs a signal based on an input shaft rotation speed of the gear shift device 3, an output shaft rotation speed sensor 203 that outputs a signal based on an output shaft rotation speed of the gear shift device 3, a shift position sensor 204 that outputs a signal based on an operating position of the shift lever 6, a clutch stroke sensor 205 that detects a clutch stroke in the automatic clutch 2 (for example, detects a slide moving position of a release bearing of the CSC 22), and a towing switch 206 that can be operated by a driver. The towing switch 206 is disposed in an instrument panel in the vicinity of a driver seat or the like and outputs a towing signal indicating a towing state by allowing a driver to turn on the towing switch when the vehicle travels while towing a towed vehicle (such as a trailer or a camping car) connected thereto.

The output interface of the clutch ECU 200 is connected to the clutch actuator 8 and the like. The ECUs 100 and 200 are connected to each other via a bidirectional bus to perform communication for transmitting and receiving necessary information therebetween.

Free running which is an example of a traveling state of a vehicle will be described below. Free running is a state in which coast traveling is executed by disengaging the automatic clutch 2 during traveling of a vehicle. In the free running, since a braking force due to drag of the engine 1 (a so-called engine brake) is not generated, it is possible to increase a coast traveling distance and to achieve an improvement in fuel consumption rate of the engine 1. The free running includes a traveling state in which the engine 1 is stopped (the rotation speed of the engine 1 is set to "0" by stopping injection of fuel from the injector 15 and stopping the ignition operation of the ignition plug) and a traveling state in which the engine 1 is driven (driven at an idling rotation speed). In this embodiment, it is assumed that the free running in which the engine 1 is stopped is executed.

Free running start conditions (i.e. coast traveling start conditions) are satisfied when a state in which none of the accelerator pedal 51, the brake pedal 53, and the clutch pedal 91 is depressed (a state in which the amount of operation is "0" or substantially "0") is maintained for a predetermined time (for example, about 3 sec) during traveling of the vehicle and a vehicle speed is equal to or higher than a predetermined value. Free running end conditions are satisfied when at least one of the accelerator pedal 51, the brake pedal 53, and the clutch pedal 91 is depressed during free running or when the vehicle speed is lowered to be less than a predetermined value.

The free running start and end control (free running control) is performed by the engine ECU 100 and the clutch ECU 200.

Free running control by which this embodiment is characterized will be described below. When a loading weight of a vehicle is large or when a vehicle tows a towed vehicle, preventing free running regardless of a vehicle speed or the like in consideration of a likelihood that an inertial force of the vehicle will increase excessively and excellent deceleration performance will not be secured can be considered. However, depending on a traveling state of the vehicle or a gradient of a road surface on which the vehicle travels, there may be a situation in which deceleration performance can be secured even when a loading weight of the vehicle is large or when the vehicle tows a towed vehicle.

In this embodiment, in consideration of such circumstances, it is possible to achieve an improvement in fuel consumption rate of the engine 1 (an energy consumption rate of a driving force source) by permitting free running in a situation in which deceleration performance of the vehicle can be excellently secured when a loading weight of the vehicle is large or when the vehicle tows a towed vehicle.

Specifically, an added weight which is a weight of at least one of a loading weight of the vehicle and a weight of a towed vehicle when the vehicle tows the towed vehicle is compared with a preset free running prevention weight threshold value (i.e. a coast traveling prevention weight threshold value), free running is prevented when the added weight is equal to or greater than the free running prevention weight threshold value even if the free running start conditions are satisfied, and the free running prevention weight threshold value is changed using a speed of the vehicle (hereinafter also simply referred to as a vehicle speed), an acceleration of the vehicle, and a downhill gradient of a road surface on which the vehicle travels as parameters. More specifically, when the values of the parameters (the vehicle speed, the vehicle acceleration, and the downhill gradient of the road surface on which the vehicle travels) are small, the free running prevention weight threshold value is set to be larger than when the values of the parameters are large. When the added weight is less than the free running prevention weight threshold value set based on the vehicle speed, is less than the free running prevention weight threshold value set based on the vehicle acceleration, and is less than the free running prevention weight threshold value set based on the downhill gradient of the road surface on which the vehicle travels, free running is permitted and free running is executed if the free running start conditions are satisfied. On the other hand, when the added weight is equal to or greater than the free running prevention weight threshold value (at least one of the free running prevention weight threshold value set based on the vehicle speed, the free running prevention weight threshold value set based on the vehicle acceleration, and the free running prevention weight threshold value set based on the downhill gradient of the road surface on which the vehicle travels), free running is prevented even if the free running start conditions are satisfied.

That is, when the vehicle speed is low, satisfactory deceleration performance can be secured even if the loading weight of the vehicle or the weight of the towed vehicle is large, and thus the free running prevention weight threshold value is set to a large value (an added weight range in which free running is permitted is enlarged). Similarly, when the vehicle acceleration is low, satisfactory deceleration performance can be secured even if the loading weight of the vehicle or the weight of the towed vehicle is large, and thus the free running prevention weight threshold value is set to a large value. When the downhill gradient of the road surface on which the vehicle travels is small, satisfactory deceleration performance can be secured even if the loading weight of the vehicle or the weight of the towed vehicle is large, and thus the free running prevention weight threshold value is set to a large value. Accordingly, even when the loading weight of the vehicle is large or when the vehicle tows a towed vehicle, it is possible to achieve an improvement in fuel consumption rate of the engine 1 by permitting free running in a situation in which deceleration performance of the vehicle can be satisfactorily secured.

In other words, a range of the parameter in which execution of free running is permitted is determined depending on an actual added weight, free running is permitted when the parameter is within the determined range, and free running is prevented even if the free running start conditions are satisfied when the parameter departs from the determined range.

The free running control is performed by the clutch ECU 200. Accordingly, in the clutch ECU 200, a functional part that performs the free running control is configured as a coast traveling preventing unit (a coast traveling preventing unit that prevents free running even if the coast traveling start conditions are satisfied when the added weight which is a weight of at least one of the loading weight of the vehicle and the weight of a towed vehicle when the vehicle tows the towed vehicle is equal to or greater than the coast traveling prevention weight threshold value, changes the coast traveling prevention weight threshold value using at least one of the vehicle speed, the vehicle acceleration, and the downhill gradient of the road surface on which the vehicle travels as a parameter, and sets the coast traveling prevention weight threshold value to be greater when the value of the parameter is relatively small than when the value of the parameter is relatively large) in the claims. In this way, the clutch ECU 200 is an example of the controller in the claims.

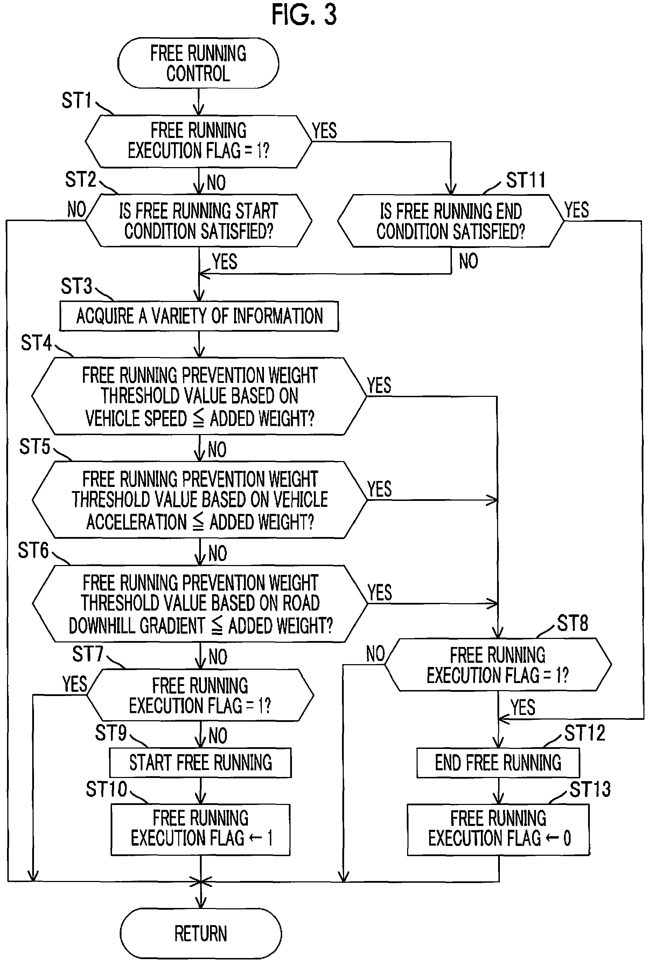

A routine of the free running control will be described below with reference to the flowchart illustrated in FIG. 3. This flowchart is repeatedly performed at predetermined intervals during traveling of the vehicle. Whether the vehicle is traveling is determined based on an output signal from the output shaft rotation speed sensor 203. When traveling is started immediately after the engine is started, a free running execution flag which will be described later is reset to "0."

First, in Step ST1, it is determined whether the free running execution flag stored in advance in the clutch ECU 200 is set to "1." The free running execution flag is set to "1" at a time point at which the free running starts, and is reset to "0" at a time point at which the free running ends (is released).

Since the free running execution flag is reset to "0" at a time point at which the vehicle starts traveling, the determination result of Step ST1 is NO and the routine transitions to Step ST2. In Step ST2, it is determined whether free running start conditions are satisfied. As described above, the free running start conditions are satisfied when a state in which none of the accelerator pedal 51, the brake pedal 53, and the clutch pedal 91 is depressed (a state in which the amount of depression is "0" or substantially "0") is maintained for a predetermined time (for example, about 3 sec) during traveling of the vehicle and the vehicle speed is equal to or higher than a predetermined value (a value lower than an upper limit value $V_L$ of the vehicle speed which will be described later; for example, about 20 km/h). The amount of depression of the accelerator pedal 51 is calculated based on an output signal from the accelerator pedal stroke sensor 101. The amount of depression of the brake pedal 53 is calculated based on an output signal from the brake pedal switch 102. The amount of depression of the clutch pedal 91 is calculated based on an output signal from the clutch pedal stroke sensor 201. The vehicle speed is calculated based on an output signal from the output shaft rotation speed sensor 203.

When the vehicle starts traveling, an operation of the accelerator pedal 51 for accelerating the vehicle or an operation of the clutch pedal 91 for performing gear shift of the gear shift device 3 is generally performed, and thus the determination result of Step ST2 is NO and the routine is restarted. Accordingly, until the free running start conditions are satisfied, the operations of Step ST1 (NO determination in Step ST1) and Step ST2 (NO determination in Step ST2) are repeated.

When the free running start conditions are satisfied and the determination result of Step ST2 is YES, the routine transitions to Step ST3 and a variety of information indicating a current traveling state of the vehicle or the like is acquired. Specifically, information such as the vehicle speed which is calculated based on the output signal from the output shaft rotation speed sensor 203, the vehicle acceleration which is calculated as a variation per unit time of the vehicle speed, and a road surface gradient which is calculated based on the output signal from the G sensor 106 is acquired. Information on whether a towing signal is output from the towing switch 206 is also acquired. In calculating the road surface gradient, an influence of the acceleration and the deceleration of the vehicle is also included in the output signal from the G sensor 106. Accordingly, an influence which the acceleration and deceleration of the vehicle which is calculated based on the output signal from the output shaft rotation speed sensor 203 applies to the output signal from the G sensor 106 is acquired by experiment or the like and the road surface gradient is calculated by excluding the influence of the acceleration and the deceleration of the vehicle from the longitudinal acceleration calculated based on the output signal from the G sensor 106.

After a variety of information has been acquired, the routine transitions to Step ST4, the free running prevention weight threshold value which is determined depending on the current vehicle speed is compared with the added weight which is the loading weight of the vehicle and the weight of a towed vehicle when the vehicle tows the towed vehicle, and it is determined whether the added weight is equal to or greater than the free running prevention weight threshold value.

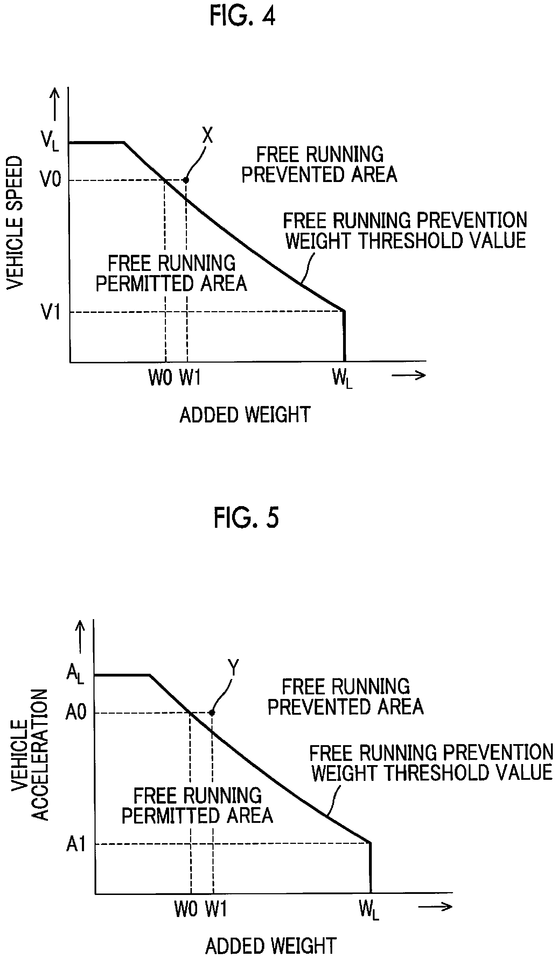

In this case, the free running prevention weight threshold value is extracted from a vehicle speed-added weight map illustrated in FIG. 4. The vehicle speed-added weight map is prepared based on experiment or simulation and is stored in the ROM of the clutch ECU 200. Specifically, the vehicle speed-added weight map is a map for extracting the free running prevention weight threshold value based on the vehicle speed. A line that partitions a free running permitted area and a free running prevented area in FIG. 4 indicates the free running prevention weight threshold value. In the vehicle speed-added weight map, the free running prevention weight threshold value is set to a predetermined upper limit value $W_L$ until the vehicle speed reaches a predetermined value V1, and the free running prevention weight threshold value is set to decrease with an increase in the vehicle speed when the vehicle speed is higher than the predetermined value V1. In the vehicle speed-added weight map, the upper limit value of the vehicle speed in the free running permitted area is set to a predetermined value $V_L$ (for example, 100 km/h). The upper limit value is set based on experiment or simulation for each vehicle model. This is because, since a weight (a vehicle weight in a state in which the loading weight is "0" and the vehicle does not tow a towed vehicle) differs depending on vehicle models and braking performance of a braking device (a brake device) also differs accordingly, the upper limit value of the vehicle speed in which deceleration performance of the vehicle can be satisfactorily secured differs.

Setting of the upper limit value of the vehicle speed in the free running permitted area to the predetermined value $V_L$ corresponds to "configuration to prevent coasting traveling regardless of the added weight when the value of the parameter (the vehicle speed) is equal to or higher than a predetermined upper limit value" in the claims.

The added weight is the loading weight of the vehicle and the weight of a towed vehicle when the vehicle tows the towed vehicle (the sum of the weights) and can be calculated by Expressions (1) to (4) using the fact that an influence of the loading weight and the weight of the towed vehicle appears in the relationship between a driving force and an acceleration of the vehicle.

$$F = M \times A \qquad (1)$$

$$F = T \times i \times a \qquad (2)$$

$$M = (T \times i \times a)/A \qquad (3)$$

$$Ma = M - m \qquad (4)$$

Expression (1) represents that the driving force F of the vehicle is expressed by a product of the total vehicle weight M and the vehicle acceleration A. The total vehicle weight M refers to a sum of the original vehicle weight (the vehicle weight in a state in which the loading weight is "0" and the vehicle does not tow a towed vehicle), the loading weight of the vehicle, and the weight of a towed vehicle when the vehicle tows the towed vehicle.

Expression (2) represents that the driving force F of the vehicle is expressed by a product of an engine torque T, a gear shift ratio i of the gear shift device 3, and a coefficient a which is experimentally determined for each vehicle depending on a reduction gear ratio of a final reduction gear mechanism, a diameter of the driving wheels 43, a power transmission efficiency, or the like. The engine torque T is calculated based on an amount of intake air which is calculated based on the output signal from the air flow meter 107, an engine rotation speed which is calculated based on the output signal from the crank position sensor 103, and a throttle opening level which is calculated based on the output signal from the throttle opening level sensor 104. The gear shift ratio i is calculated based on the output signal from the shift position sensor 204 or a ratio of the input shaft rotation speed of the gear shift device 3 calculated based on the output signal from the input shaft rotation speed sensor 202 and the output shaft rotation speed of the gear shift device 3 calculated based on the output signal from the output shaft rotation speed sensor 203.

Expression (3) is for calculating the total vehicle weight M using Expressions (1) and (2). Since traveling conditions such as traveling resistance based on a vehicle speed, a steering angle, and a frictional coefficient of a road surface also affect the acceleration A, it is preferable that the total vehicle weight M be calculated in consideration of such traveling conditions.

Expression (4) is an expression for calculating an added weight Ma by subtracting the original vehicle weight m (the vehicle weight in a state in which the loading weight is "0" and the vehicle does not tow a towed vehicle) from the total vehicle weight M calculated by Expression (3). The original vehicle weight m is defined in advance in a stage of design of the vehicle.

When a vehicle weight sensor is provided and the vehicle does not tow a towed vehicle, that is, when only the loading weight contributes to the added weight, the added weight Ma (the loading weight) may be acquired by calculating the total vehicle weight M based on the output signal from the vehicle weight sensor and subtracting the original vehicle weight m (the vehicle weight in a state in which the loading weight is "0") from the calculated total vehicle weight M. This is applied to, for example, a vehicle not including a towing tool for towing a towed vehicle.

When the towing switch 206 is turned on, the free running prevention weight threshold value may be extracted by applying a predefined value (for example, a weight of a general trailer) to the vehicle speed-added weight map.

When the added weight is less than the free running prevention weight threshold value based on the current vehicle speed and the determination result of Step ST4 is NO, the routine transitions to Step ST5. On the other hand, when the added weight is equal to or greater than the free running prevention weight threshold value based on the current vehicle speed and the determination result of Step ST4 is YES, the routine transitions to Step ST8. In Step ST8, it is determined whether the free running execution flag is set to "1." Since the free running execution flag is reset to "0" at the start time of traveling immediately after the engine is started as described above, the determination result of Step ST8 is NO and the routine is restarted without performing any operation. That is, the routine is restarted without starting free running (with the automatic clutch 2 not disengaged). This operation corresponds to an operation of not starting free running and maintaining the engaged state of the automatic clutch 2 when the added weight is equal to or greater than the free running prevention weight threshold value based on the current vehicle speed even if the free running start conditions are satisfied. In the vehicle speed-added weight map illustrated in FIG. 4, an example thereof is a case of an operating point X (a case in which the vehicle speed is V0, the free running prevention weight threshold value is WO, and the added weight is W1 greater than W0).

When the determination result of Step ST4 is NO and the routine transitions to Step ST5, a free running prevention weight threshold value which is determined based on the current vehicle acceleration is compared with the added weight, and it is determined whether the added weight is equal to or greater than the free running prevention weight threshold value.

In this case, the free running prevention weight threshold value is extracted from a vehicle acceleration-added weight map illustrated in FIG. 5. The vehicle acceleration-added weight map is prepared based on experiment or simulation and is stored in the ROM of the clutch ECU 200. Specifically, the vehicle acceleration-added weight map is a map for extracting the free running prevention weight threshold value based on the vehicle acceleration. A line that partitions a free running permitted area and a free running prevented area in FIG. 5 indicates the free running prevention weight threshold value. In the vehicle acceleration-added weight map, the free running prevention weight threshold value is set to a predetermined upper limit value until the vehicle acceleration reaches a predetermined value A1, and the free running prevention weight threshold value is set to decrease with an increase in the vehicle acceleration when the vehicle acceleration is higher than the predetermined value A1. In the vehicle acceleration-added weight map, the upper limit value of the vehicle speed in the free running permitted area is set to a predetermined value $A_L$. The upper limit value is set based on experiment or simulation for each vehicle model. This is because the upper limit value of the vehicle acceleration in which deceleration performance of the vehicle can be satisfactorily secured differs depending on vehicle models.

Setting of the upper limit value of the vehicle acceleration in the free running permitted area to the predetermined value $A_L$ corresponds to "configuration to prevent free running (i.e. coast traveling) regardless of the added weight when the value of the parameter (the vehicle acceleration) is equal to or higher than a predetermined upper limit value" in the claims.

When the added weight is less than the free running prevention weight threshold value based on the current vehicle acceleration and the determination result of Step ST5 is NO, the routine transitions to Step ST6. On the other hand, when the added weight is equal to or greater than the free running prevention weight threshold value based on the current vehicle acceleration and the determination result of Step ST5 is YES, the routine transitions to Step ST8. In Step ST8, as described above, it is determined whether the free running execution flag is set to "1." Since the free running execution flag is reset to "0" at the start time of traveling immediately after the engine is started, the determination result of Step ST8 is NO and the routine is restarted. That is, the routine is restarted without starting free running. This operation corresponds to an operation of not starting free running and maintaining the engaged state of the automatic clutch 2 when the added weight is equal to or greater than the free running prevention weight threshold value based on the current vehicle acceleration even if the free running start conditions are satisfied. In the vehicle acceleration-added weight map illustrated in FIG. 5, an example thereof is a case of an operating point Y (a case in which the vehicle acceleration is A0, the free running prevention weight threshold value is W0, and the added weight is W1 greater than W0).

When the determination result of Step ST5 is NO and the routine transitions to Step ST6, a free running prevention weight threshold value which is determined based on the downhill gradient of the road surface on which the vehicle travels currently is compared with the added weight, and it is determined whether the added weight is equal to or greater than the free running prevention weight threshold value.

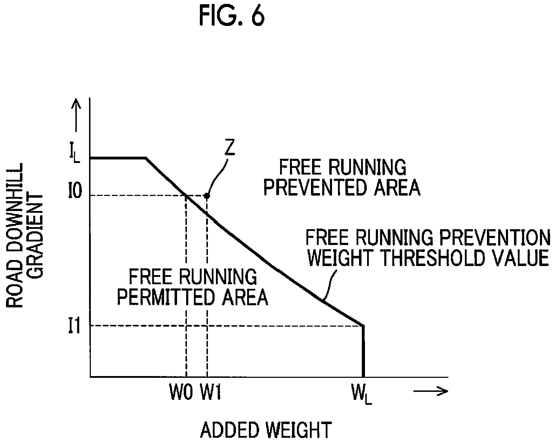

In this case, the free running prevention weight threshold value is extracted from a road downhill gradient-added weight map illustrated in FIG. 6. The road downhill gradient-added weight map is prepared based on experiment or simulation and is stored in the ROM of the clutch ECU 200. Specifically, the road downhill gradient-added weight map is a map for extracting the free running prevention weight threshold value based on the downhill gradient of the road surface. A line that partitions a free running permitted area and a free running prevented area in FIG. 6 indicates the free running prevention weight threshold value. In the road downhill gradient-added weight map, the free running prevention weight threshold value is set to a predetermined upper limit value until the downhill gradient of the road surface reaches a predetermined value I1, and the free running prevention weight threshold value is set to decrease with an increase in the downhill gradient of the road surface when the downhill gradient of the road surface is higher than the predetermined value I1. In the road downhill gradient-added weight map, the upper limit value of the downhill gradient of the road surface in the free running permitted area is set to a predetermined value $I_L$. The upper limit value is set based on experiment or simulation for each vehicle model. This is because the upper limit value of the downhill gradient of the road surface in which deceleration performance of the vehicle can be satisfactorily secured differs depending on vehicle models.

Setting of the upper limit value of the downhill gradient of the road surface in the free running permitted area to the predetermined value $I_L$ corresponds to "configuration to prevent coasting traveling regardless of the added weight when the value of the parameter (the downhill gradient of the road surface on which the vehicle travels) is equal to or higher than a predetermined upper limit value" in the claims.

When the added weight is less than the free running prevention weight threshold value based on the current downhill gradient of the road surface and the determination result of Step ST6 is NO, the routine transitions to Step ST7. On the other hand, when the added weight is equal to or greater than the free running prevention weight threshold value based on the current downhill gradient of the road surface and the determination result of Step ST6 is YES, the routine transitions to Step ST8. In Step ST8, as described above, it is determined whether the free running execution flag is set to "1." Since the free running execution flag is reset to "0" at the start time of traveling immediately after the engine is started, the determination result of Step ST8 is NO and the routine is restarted. That is, the routine is restarted without starting free running. This operation corresponds to an operation of not starting free running and maintaining the engaged state of the automatic clutch 2 when the added weight is equal to or greater than the free running prevention weight threshold value based on the current downhill gradient of the road surface even if the free running start conditions are satisfied. In the road downhill gradient-added weight map illustrated in FIG. 6, an example thereof is a case of an operating point Z (a case in which the downhill gradient of the road surface is I0, the free running prevention weight threshold value is W0, and the added weight is W1 greater than W0).

In Step ST7, it is determined whether the free running execution flag is set to "1." Since the free running execution flag is reset to "0" at the start time of traveling immediately after the engine is started, the determination result of Step ST7 is NO, the routine transitions to Step ST9, and free running is started. That is, the automatic clutch 2 is disengaged in response to a clutch disengagement command signal output from the clutch ECU 200. Injection of fuel from the injector 15 is stopped and an ignition operation of the ignition plug is stopped, whereby the engine 1 is stopped. Thereafter, the routine transitions to Step ST10 and the free running execution flag is set to "1."

After free running has been started in this way, since the free running execution flag in the previous routine is set to "1," the determination result of Step ST1 in a next routine is YES, and it is determined in Step ST11 whether free running end conditions are satisfied. As described above, when at least one of the accelerator pedal 51, the brake pedal 53, and the clutch pedal 91 is depressed or when the vehicle speed decreases to be less than a predetermined value, it is determined that the free running end conditions are satisfied and the determination result of Step ST11 is YES.

When the free running end conditions are not satisfied yet and the determination result of Step ST11 is NO, a variety of information indicating the current traveling state of the vehicle is acquired in Step ST3 as described above. Thereafter, the routine transitions to the operations subsequent to Step ST4 and when the determination results of Steps ST4 to ST6 are NO (when free running is permitted), the routine transitions to Step ST7. At this time, since the free running execution flag is already set to 1 (since the free running execution flag is set to 1 in the previous routine), the determination result of Step ST7 is YES, free running is maintained, and the routine is restarted.

On the other hand, when the determination result of any one of Steps ST4 to ST6 is YES (when free running is prevented), the routine transitions to Step ST8. At this time, since the free running execution flag is already set to 1 (since the free running execution flag has been set to 1 in the previous routine), the determination result of Step ST8 is YES, the routine transitions to Step ST12, and free running is ended. That is, the automatic clutch 2 is engaged in response to a clutch engagement command signal output from the clutch ECU 200. The engine 1 is started. As an operation of starting the engine 1, the engine 1 is started by starting cranking of the engine 1 with activation of a starter which is not illustrated and starting injection of fuel from the injector 15 and ignition of the ignition plug by the igniter 16. Thereafter, in Step ST13, the free running execution flag is reset to "0" and the routine is restarted.

When the free running end conditions are satisfied and the determination result of Step ST11 is YES, free running is ended in Step ST12. That is, the automatic clutch 2 is engaged in response to a clutch engagement command signal output from the clutch ECU 200. The engine 1 is started. A target rotation speed of the engine 1 in this case is set to correspond to an amount of depression of the accelerator pedal 51 which is calculated based on the output signal from the accelerator pedal stroke sensor 101. That is, when the free running end conditions are satisfied by an operation of depressing the accelerator pedal 51, the target rotation speed is set to acquire an engine output corresponding to the amount of depression. When the free running end conditions are satisfied by another operation or the like, an idling rotation speed is set as the target rotation speed. Thereafter, in Step ST13, the free running execution flag is reset to "0" and the routine is restarted.

Since these operations are performed, the operation of preventing free running (setting free running to be non-executable when free running is not executed and ending free running when free running is executed) when the determination result of any one of Steps ST4 to ST6 is YES corresponds to an "operation of preventing free running even if the coast traveling start conditions are satisfied when the added weight which is the weight of at least one of the loading weight of the vehicle and the weight of a towed vehicle when the vehicle tows the towed vehicle is equal to or greater than the coast traveling prevention weight threshold value" as an operation of the coast traveling preventing unit in the claims. The above-mentioned operations are repeated at predetermined intervals.

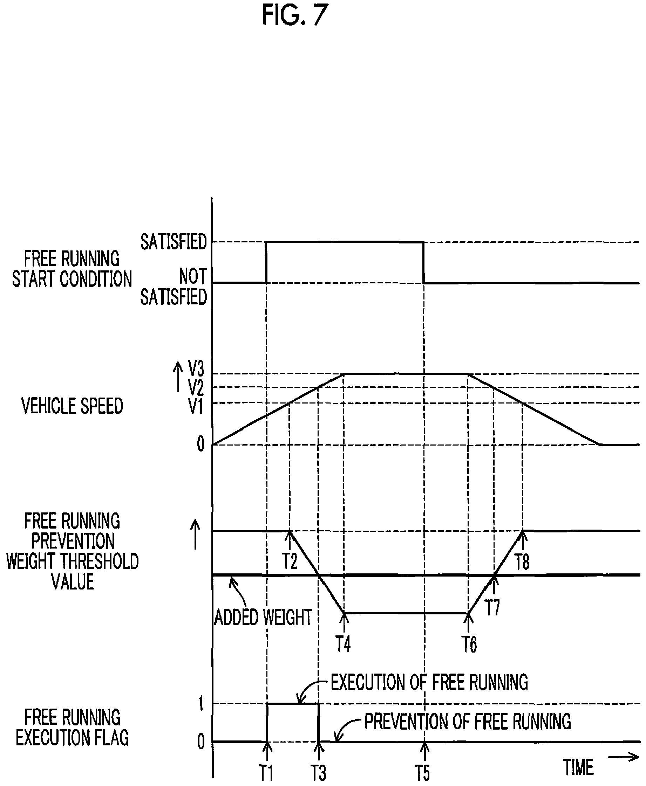

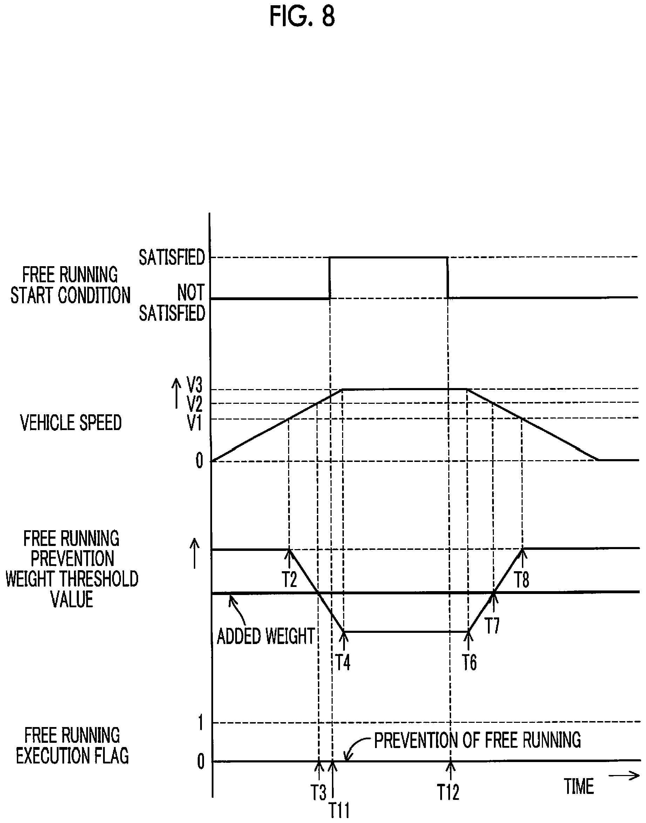

FIGS. 7 and 8 are timing charts illustrating an example of changes of the free running start conditions, the vehicle speed, the free running prevention weight threshold value, and the free running execution flag in this embodiment. FIG. 7 illustrates an example in which free running is ended because the free running prevention weight threshold value is equal to or less than the added weight with an increase in the vehicle speed during execution of free running, and FIG. 8 illustrates an example in which free running is prevented because the vehicle speed is equal to or greater than a predetermined value and the free running prevention weight threshold value is equal to or less than the added weight when the free running start conditions are satisfied.

In the timing chart illustrated in FIG. 7, the free running start conditions are satisfied at time T1. At time T1, the vehicle speed is low and the free running prevention weight threshold value is set to be greater than the added weight (the added weight is less than the free running prevention weight threshold value). Accordingly, at time T1, free running is started and the free running execution flag is set to "1." Thereafter, with an increase in the vehicle speed, the free running prevention weight threshold value decreases gradually at time T2 (the vehicle speed V1), and the free running prevention weight threshold value decreases to the added weight at time T3 (the vehicle speed V2). Accordingly, at time T3, the free running start conditions are satisfied, but free running is ended and the free running execution flag is reset to "0."

In a period from time T4 to time T6, the vehicle speed is constant (the vehicle speed V3) and the free running prevention weight threshold value is constant. At time T5 in the period, the free running start conditions are not satisfied, but free running is already ended (time T3). The vehicle speed decreases at time T6 and the free running prevention weight threshold value increases to the added weight at time T7 (the vehicle speed V2), but since the free running start conditions are not satisfied, free running is not started. Then, at time T8, the vehicle speed decreases to V 1.

The timing chart illustrated in FIG. 8 will be described below. Here, only differences from the timing chart illustrated in FIG. 7 will be described. In the timing chart illustrated in FIG. 8, the free running start conditions are satisfied at time T11, but since the free running prevention weight threshold value already decreases to the added weight a time T3, free running is not started. The free running end conditions are satisfied at time T12, but the free running prevention weight threshold value is equal to or less than the added weight yet at time T12. In this way, in FIG. 8, in a period in which the free running start conditions are satisfied, the free running prevention weight threshold value is equal to or less than the added weight and thus free running is not started.

As described above, in this embodiment, when the added weight is equal to or greater than the free running prevention weight threshold value, free running is prevented even if the free running start conditions are satisfied, and the free running prevention weight threshold value is changed using the vehicle speed, the vehicle acceleration, and the downhill gradient of the road surface on which the vehicle travels as parameters. That is, the free running prevention weight threshold value is set to a greater value as the vehicle speed becomes lower (when the vehicle speed is low than when the vehicle speed is high), as the vehicle acceleration becomes lower (when the vehicle acceleration is low than when the vehicle acceleration is high), and as the downhill gradient of the road surface on which the vehicle travels becomes smaller (when the downhill gradient of the road surface is small than when the downhill gradient of the road surface is large). Accordingly, even when the loading weight of the vehicle is large or the vehicle tows a towed vehicle, it is possible to achieve an improvement in fuel consumption rate of the engine 1 by permitting free running in a situation in which deceleration performance of the vehicle can be satisfactorily secured.

-Modified example- A modified example will be described below. In the above-mentioned embodiment, the upper limit value $I_L$ of the downhill gradient of the road surface in the road downhill gradient-added weight map is set to a fixed value regardless of the vehicle speed or the vehicle acceleration. In this modified example, the upper limit value $I_L$ of the downhill gradient of the road surface is changed depending on the vehicle speed instead.

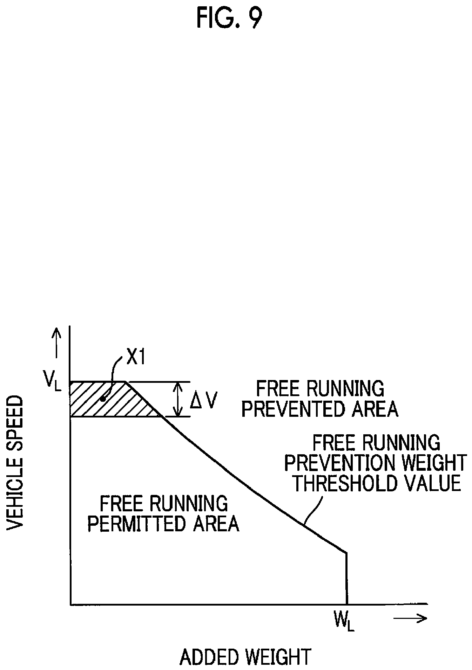

Specifically, as illustrated in the vehicle speed-added weight map of FIG. 9, when an operating point is indicated by X1 in the drawing and is in the free running permitted area, but when the vehicle speed is close to the upper limit value $V_L$ and the road surface on which the vehicle travels has a downhill gradient, the vehicle speed (an actual vehicle speed) reaches the upper limit value $V_L$ for a short time and free running is prevented. For example, when this situation starts immediately after free running is started, there is concern that free running will be prevented immediately after free running is started and behavior of the vehicle will be changed for a short time.

Accordingly, in this modified example, when the actual vehicle speed is less than the upper limit value $V_L$ of the vehicle speed and a difference value therebetween is less than a predetermined value, the upper limit value set for the downhill gradient of the road surface is set to be smaller than when the difference value is equal to or greater than the predetermined value.

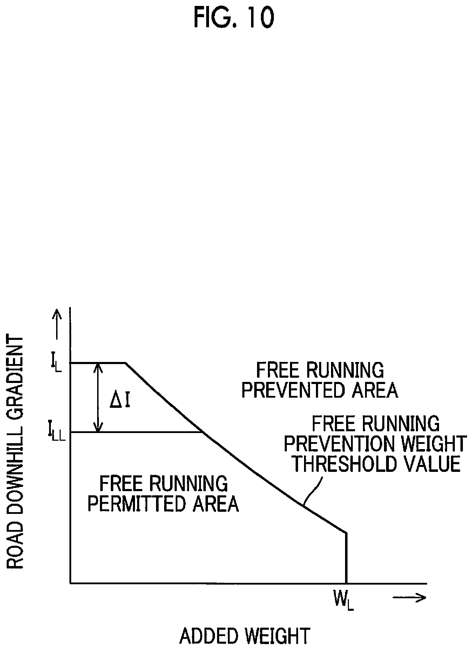

Specifically, as illustrated in FIG. 9, a range of a vehicle speed with a predetermined deviation $\Delta V$ from the upper limit value $V_L$ of the vehicle sped is set as a downhill gradient upper limit value changing area (see a hatched area in FIG. 9). Then, when the actual vehicle speed is in the downhill gradient upper limit value changing area, the upper limit value of the downhill gradient of the road surface is decreased by a predetermined value $\Delta I$ and the upper limit value of the downhill gradient of the road surface is set to $I_{LL}$ in the drawing, as illustrated in in the road downhill gradient-added weight map of FIG. 10.

When the upper limit value of the downhill gradient of the road surface is decreased by the predetermined value in this way, free running is prevented on the condition of the downhill gradient of the road surface (when the downhill gradient of the road surface reaches the upper limit value (the upper limit value set to be decreased)) before the actual vehicle speed reaches the upper limit value $V_L$. Accordingly, it is possible to prevent a change of behavior of the vehicle for a short time.

The upper limit value $I_L$ of the downhill gradient of the road surface may be changed depending on the vehicle acceleration. That is, when the acceleration (the actual vehicle acceleration) is less than the upper limit value $A_L$ of the vehicle acceleration and a difference value therebetween is less than a predetermined value, the upper limit value set for the downhill gradient of the road surface is set to be smaller than when the difference value is equal to or greater than the predetermined value.

When the upper limit value of the downhill gradient of the road surface is decreased by the predetermined value in this way, free running is prevented on the condition of the downhill gradient of the road surface (when the downhill gradient of the road surface reaches the upper limit value (the upper limit value set to be decreased)) before the actual vehicle acceleration reaches the upper limit value. Accordingly, it is possible to prevent a change of behavior of the vehicle for a short time.

-Other embodiments- The invention is not limited to the above-mentioned embodiment and the above-mentioned modified example, but can be modified or applied to various forms which are included in the scope of the appended claims and a range equivalent to the scope.

For example, in the above-mentioned embodiment and the above-mentioned modified example, the invention is applied to an FF type vehicle, but the invention may be applied to a front engine/rear drive (FR) (also abbreviated to FR) type vehicle, a four-wheel-drive (also abbreviated to 4WD) type vehicle, or a midship type vehicle. The gear shift device 3 includes six forward shift stages, but the invention is not limited thereto and the number of shift stages can be arbitrarily set.

In the above-mentioned embodiment, the free running prevention weight threshold value is set for each parameter using the vehicle speed, the vehicle acceleration, and the downhill gradient of the road surface on which the vehicle travels as parameters, and it is determined whether to permit free running by comparison with the added weight. The invention is not limited to this configuration, and the free running prevention weight threshold value may be set for one or two of the parameters and it may be determine whether to permit free running by comparison with the added weight. In this case, the free running prevention weight threshold values when all the parameters are used may be set to be greater than the free running prevention weight threshold values when one or two parameters are used (the range of the added weight in which free running is permitted may be enlarged).

In the above-mentioned embodiment and the above-mentioned modified example, the towing switch 206 is provided and it is determined whether a towed vehicle is towed depending on whether a driver's operation is performed. Instead or in addition, a towing sensor that outputs a towing signal when a towed vehicle is connected may be provided in a towing tool which is not illustrated and it may be determined whether a towed vehicle is towed based on an output signal from the towing sensor.

In the above-mentioned embodiment and the above-mentioned modified example, the internal combustion engine has been described to be a gasoline engine. The invention is not limited to this configuration, but the internal combustion engine may be another internal combustion engine such as a diesel engine. The invention may be applied to a hybrid vehicle using an internal combustion engine and an electric motor as driving force sources or an electric vehicle using only an electric motor as a driving force source.

In the above-mentioned embodiment and the above-mentioned modified example, the automatic clutch 2 which is activated by the CSC 22 has been described. The invention is not limited thereto, and the invention can be applied to a known release fork type clutch device in which the release bearing is moved by a release fork.

In the above-mentioned embodiment and the above-mentioned modified example, the engine 1 is stopped during free running. The invention is not limited thereto, and the engine 1 may be driven (driven at about an idling rotation speed) during free running.

In the above-mentioned embodiment and the above-mentioned modified example, an example in which the gear shift device 3 is configured as manual gear shift device has been described. The invention is not limited to the example, and can be applied to another automatic gear shift device such as a stepped automatic gear shift device or a continuously variable transmission (also abbreviated to CVT). When gear shift device is a stepped automatic gear shift device, the connection/disconnection device in the claims corresponds to frictional engagement elements for setting shift stages. When the gear shift device is a CVT, the connection/disconnection device in the claims corresponds to frictional engagement elements of a forward/reverse switching mechanism.

The invention can be applied to control of a vehicle that can execute free running by disengaging an automatic clutch.

**Claims**

1. A controller applied to a vehicle that is capable of executing coast traveling in which a connection-disconnection device (2) is disengaged when a predetermined coast traveling start condition is satisfied, the connection-disconnection device (2) being disposed in a power transmission path between a driving force source (1) and driving wheels (43, 43), the controller **characterized by** comprising a coast traveling preventing unit configured to:

(i) prevent the coast traveling even if the coast traveling start condition is satisfied when an added weight is equal to or greater than a coast traveling prevention weight threshold value, the added weight being at least one of a loading weight of the vehicle and a weight of a towed vehicle when the vehicle tows the towed vehicle;
(ii) change the coast traveling prevention weight threshold value using at least one of a vehicle speed, a vehicle acceleration, and a downhill gradient of a road surface on which the vehicle travels as a parameter; and
(iii) set the coast traveling prevention weight threshold value to be greater, when the value of the parameter is relatively small, than when the value of the parameter is relatively large.

2. The controller according to claim 1, **characterized in that** the coast traveling preventing unit is configured to prevent the coast traveling regardless of the added weight when the value of the parameter is equal to or greater than an upper limit value.

3. The controller according to claim 2, **characterized in that** the coast traveling preventing unit is configured to:

(i) change the coast traveling prevention weight threshold value using the vehicle speed and the downhill gradient of the road surface on which the vehicle travels as parameters; and
(ii) when the vehicle speed is lower than the upper limit value set for the vehicle speed and a difference value between the vehicle speed and the upper limit value is less than a predetermined value, set the upper limit value set for the downhill gradient of the road surface on which the vehicle travels to be less than the upper limit value set when the difference value is equal to or greater than the predetermined value.

4. The controller according to claim 2, **characterized in that** the coast traveling preventing unit is configured to:

(i) change the coast traveling prevention weight threshold value using the vehicle acceleration and the downhill gradient of the road surface on which the vehicle travels as parameters; and
(ii) when the vehicle acceleration is lower than the upper limit value set for the vehicle acceleration and a difference value between the vehicle acceleration and the upper limit value is less than a predetermined value, set the upper limit value set for the downhill gradient of the road surface on which the vehicle travels to be less than the upper limit value set when the difference value is equal to or greater than the predetermined value.

FIG. 1

# FIG. 2

101 — ACCELERATOR PEDAL STROKE SENSOR

102 — BRAKE PEDAL SWITCH

103 — CRANK POSITION SENSOR

104 — THROTTLE OPENING SENSOR

105 — COOLANT TEMPERATURE SENSOR

106 — G SENSOR

107 — AIR FLOW METER

ENGINE ECU —100

THROTTLE MOTOR —13

INJECTOR —15

IGNITER —16

201 — CLUTCH PEDAL STROKE SENSOR

202 — INPUT SHAFT ROTATION SPEED SENSOR

203 — OUTPUT SHAFT ROTATION SPEED SENSOR

204 — SHIFT POSITION SENSOR

205 — CLUTCH STROKE SENSOR

206 — TOWING SWITCH

CLUTCH ECU —200

CLUTCH ACTUATOR —8

## FIG. 3

# FIG. 4

# FIG. 5

## FIG. 6

# FIG. 7

# FIG. 8

FREE RUNNING
START CONDITION

SATISFIED

NOT
SATISFIED

VEHICLE SPEED

V3
V2
V1

0

FREE RUNNING
PREVENTION
WEIGHT THRESHOLD
VALUE

T2

ADDED WEIGHT

T4

T6

T7

T8

FREE RUNNING
EXECUTION FLAG

1

0

PREVENTION OF FREE RUNNING

T3

T11

T12

TIME

# FIG. 9

# FIG. 10

ROAD DOWNHILL GRADIENT

$I_L$

$\Delta I$

$I_{LL}$

FREE RUNNING
PREVENTED AREA

FREE RUNNING
PREVENTION WEIGHT
THRESHOLD VALUE

FREE RUNNING
PERMITTED AREA

$W_L$

ADDED WEIGHT

**EP 3 335 956 A2**

## REFERENCES CITED IN THE DESCRIPTION

### Patent documents cited in the description

- JP 2016133015 A
- JP 2006348840 A